# EUROPÄISCHE PATENTSCHRIFT

(11) **EP 2 526 314 B1**
(45) Veröffentlichungstag und Bekanntmachung des Hinweises auf die Patenterteilung: **24.10.2018**
(21) Anmeldenummer: 10784444.1
(22) Anmeldetag: 06.11.2010
(51) Int. Cl.: F16D 3/68

(54) **ELASTISCHE KUPPLUNG**
ELASTIC COUPLING
ACCOUPLEMENT ÉLASTIQUE

(30) Priorität: 20.01.2010 DE 102010005255
(43) Veröffentlichungstag der Anmeldung: 28.11.2012
(73) Patentinhaber: Voith Patent GmbH, 89522 Heidenheim (DE)
(72) Erfinder: MISTLBAUER, Walter, A-3380 Pöchlarn (AT)
(74) Vertreter: Dr. Weitzel & Partner
(86) Internationale Anmeldenummer: PCT/EP2010/006763
(87) Internationale Veröffentlichungsnummer: WO 2011/088860

(56) Entgegenhaltungen:
- EP-A2- 0 218 377
- EP-A2- 0 493 163
- DE-C1- 3 843 496
- US-A- 3 505 832

## Beschreibung

Die vorliegende Erfindung betrifft eine Kupplungsvorrichtung zum Übertragen eines Drehmomentes von einer Antriebswelle auf eine Abtriebswelle. Die Kupplungsvorrichtung umfasst zwei Kupplungen, jeweils mit einem Primärteil und einem Sekundärteil, die entgegen der Kraft von Federn relativ zueinander begrenzt verdrehbar sind. Die Erfindung betrifft außerdem ein Verfahren zum Montieren einer solchen Kupplungsvorrichtung.

Kupplungen für solche Kupplungsvorrichtungen sind in zahlreichen Ausführungsformen bekanntgeworden. DE 39 06 201 C1 beschreibt eine drehelastische Kupplung mit Federelementen, bestehend aus elastischen Körpern, beispielsweise aus Gummi. Zwischen den Federelementen sind Stützplatten angeordnet.

US 5 573 460 beschreibt eine elastische Kupplung in Scheibenbauweise mit zwei Kupplungshälften. Im radial äußeren Bereich der Kupplung befinden sich Dämpfungskammern, die mit einem Dämpfungsmedium füllbar sind. Solche Kupplungen dienen als Drehschwingungsdämpfer im Antriebsstrang von Kraftfahrzeugen.

Auch sind sogenannte Tilger bekanntgeworden. Diese dämpfen Drehschwingungen, ohne Drehmoment zu übertragen. Siehe DE 103 46 253 A1.

Aus US 3 505 832 A1 ist eine elastische Kupplung mit einem Primär- und einem Sekundärteil bekannt geworden. Zwischen Federplatten sind Stützplatten angeordnet, jeweils getragen von Trägern.

Kupplungen der genannten Art sind Massenartikel, die vor allem im Fahrzeugbau Anwendung finden. Die Herstellungskosten spielen dabei eine große Rolle, ferner das Gewicht sowie das Bauvolumen. Diese Kriterien werden von bekannten Kupplungen nicht im wünschenswerten Maße erfüllt.

DE 38 43 496 C1 offenbart eine elastische Kupplung zur Verbindung zweier Wellen, bestehend aus einer auf der einen Welle angeordneten ersten Kupplungshälfte und einer über Gummielemente mit dieser verbundenen, auf der anderen Welle angeordneten zweiten Kupplungshälfte, wobei mehrere von der ersten Kupplungshälfte sich radial nach außen erstreckende Arme und von der anderen Kupplungshälfte ebenso viele sich radial nach außen erstreckende Arme in Umfangsrichtung abwechselnd hintereinander angeordnet sind, zwischen denen die Gummielemente unter Vorspannung eingebracht sind, die an gekrümmten Flächen der Arme anliegen und von auf den Armen befestigten Haltestücken radial gehalten sind, und wobei jedes Gummielement aus mindestens zwei zwischen zwei äußeren Metallteilen einvulkanisierten Gummiteilen mit mindestens einem dazwischen einvulkanisierten inneren Metallteil besteht, und wobei die Anlage an den Armen über die äußeren Metallteile erfolgt. Die Drehmomentseinleitung in die Kupplung erfolgt über eine Hohlwelle, welche zwei erste Kupplungshälften trägt, und die Abtriebswelle, die von der Antriebswelle umschlossen wird, trägt die beiden zweiten Kupplungshälften. Die aus den Gummielementen und äußeren Metallteilen gebildeten Pakete sind über die äußeren Metallteile formschlüssig an den Armen der beiden Kupplungshälften beziehungsweise an dort vorgesehenen angeschraubten Trägern angeschlossen.

Der Erfindung liegt die Aufgabe zugrunde, eine Kupplungsvorrichtung mit zwei Kupplungen anzugeben, welche kostengünstig herstellbar ist, sowie ein geringes Gewicht und ein geringes Bauvolumen aufweist.

Diese Aufgabe wird durch die kennzeichnenden Merkmale von Anspruch 1 gelöst.

Die erfindungsgemäße Kupplungsvorrichtung geht aus von zwei miteinander zusammenwirkenden Kupplungen. Jede Kupplung weist plattenförmige Federn (Federplatten) aus gummielastischem Material auf, getragen von mehreren Trägern, die über den Umfang der Kupplung verteilt angeordnet sind.

Die wesentlichen Erfindungsmerkmale sind die folgenden:
- Jeder Träger hat - in Draufsicht auf die Kupplungsachse gesehen - die Kontur eines Keiles, der sich radial nach innen verjüngt.
- Jeder Träger trägt auf seinen beiden Keilflächen eine Anzahl von Federplatten.
- Jeder Träger bildet zusammen mit den von ihm getragenen Federplatten eine vormontierte bauliche Federeinheit.

Hieraus ergeben sich die folgenden Vorteile:
Die einzelne Federeinheit wird dadurch hergestellt, dass auf jede Keilfläche eine Federplatte aufgebracht wird, beispielsweise durch Vulkanisieren. Auf die aufgebrachte Federplatte wird eine Blechplatte aufgebracht, und sodann auf die Blechplatte wiederum eine Federplatte, sodass sich Federplatten und Blechplatten abwechseln. Die gesamte Federeinheit wird sodann vorgespannt. Nunmehr kann sie in eine entsprechende Ausnehmung im Primärteil oder im Sekundärteil der Kupplung eingesetzt werden. Dabei wird in radialer Richtung von außen her Druck auf die Federeinheit ausgeübt, beispielsweise dadurch, dass eine Zugschraube von außen her in den keilförmigen Träger eingesetzt und im Flansch des Primärteiles oder Sekundärteiles verschraubt wird, sodass ein Anziehen der gesamten Federeinheit erfolgt.

Die sich aus der Erfindung ergebenden Vorteile lassen sich wie folgt zusammenfassen:
- Es sind keine besonderen Montagevorrichtungen zum Montieren der Federeinheit am Primärteil oder Sekundärteil erforderlich. Vielmehr lassen sich die Federeinheiten mit herkömmlichen Werkzeugen montieren. Dies verringert die Montagekosten, und damit die Fertigungskosten.
- Die Federeinheiten sind auch bei eingebautem Antrieb leicht austauschbar.
- Aufgrund des einfachen und kompakten Aufbaus ist das Gewicht der Federeinheit und damit der gesamten Kupplung gering.
- Eine Federeinheit wirkt beim Betrieb in beiden Drehrichtungen.

Die Erfindung ist anhand der Zeichnung näher erläutert. Darin ist im Einzelnen Folgendes dargestellt:
- Figur 1: zeigt in perspektivischer Darstellung eine Kupplungsvorrichtung mit den Merkmalen der Erfindung.
- Figur 2: zeigt eine vergrößerte Darstellung der Kupplungsvorrichtung gemäß Figur 1 mit Blickrichtung auf eine Stirnfläche.
- Figur 3: ist eine Ansicht des Gegenstandes von Figur 2 gemäß der Schnittlinie A - A.
- Figur 4: zeigt ein Federelement in einer Seitenansicht.
- Figur 5: zeigt das Federelement gemäß Figur 4 in einer perspektivischen Darstellung.
- Figur 6: zeigt einen keilförmigen Träger in Seitenansicht.
- Figur 7: zeigt den Gegenstand von Figur 6 in Draufsicht.

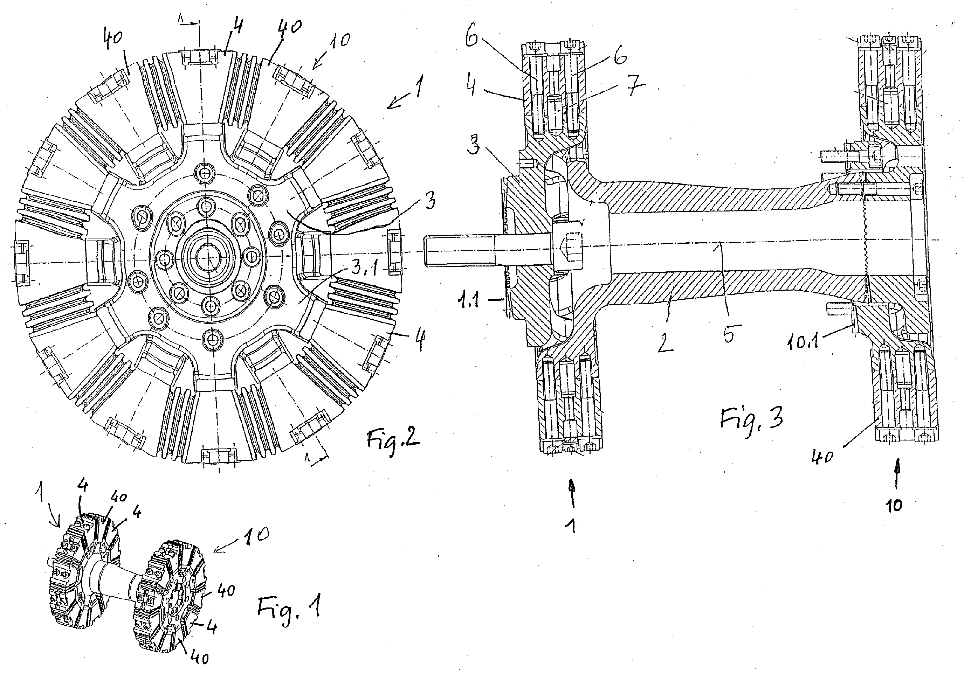

Die in Figur 1 gezeigte Kupplungsvorrichtung umfasst zwei scheibenförmige Kupplungen 1, 10. Diese sind im Wesentlichen gleichartig oder gar identisch aufgebaut. Die in Figur 1 links dargestellte Kupplung ist der hier nicht dargestellten Treibachse zugeordnet, und die in der Figur rechts dargestellte Kupplung der Getriebe-Abtriebswelle, ebenfalls nicht dargestellt. Die Kupplungsvorrichtung gemäß Figur 1 hat die Funktion einer Gelenkwelle. Damit lässt sich ein Drehmoment von der Treibachse auf die hiermit nicht fluchtende Getriebe-Abtriebswelle übertragen.

Aus Figur 3 erkennt man eine die beiden Kupplungen 1 und 10 miteinander verbindende Kardan-Hohlwelle 2.

Kupplung 1 trägt eine Stirnverzahnung 1.1 zum Übertragen von Drehmoment von der Treibachse auf Kupplung 1. Kupplung 10 trägt eine Stirnverzahnung 10.1 zur Übertragung von Drehmoment von Kupplung 10 auf die Getriebe-Abtriebswelle.

Der Aufbau der Kupplungen soll im Einzelnen anhand von Kupplung 1 näher beschrieben werden. Kupplung 1 weist einen sternförmigen Grundkörper 3 auf. Dieser weist sechs radial sich nach außen erstreckende Fortsätze 3.1 auf. Jeder Fortsatz trägt ein ganz entscheidendes Bauteil, nämlich einen Träger 4. Träger 4 ist keilförmig - siehe Figur 2. Er verjüngt sich zur Drehachse 5 der Vorrichtung hin.

Jeder Träger 4 ist an einem Fortsatz 3.1 des Grundkörpers 3 mittels Schrauben 6 befestigt. Zwischen den beiden Schrauben 6, 6 befindet sich ein Zylinderstift 7 zur Positionierung des Trägers 4.

Aus Figur 2 erkennt man, dass die beiden Kupplungen 1, 10 im Wesentlichen gleichartig aufgebaut sind. Zwischen zwei einander benachbarten keilförmigen Trägern 40, 40 der Kupplung 10 befindet sich ein keilförmiger Träger 4 der Kupplung 1.

An den beiden Keilflächen eines jeden Trägers 4, 40 ist ein Paket aus Federplatten 8 und Stützplatten 9 befestigt. Diese sind abwechselnd angeordnet. Die Federplatten sind jeweils aufvulkanisiert, zunächst auf die betreffende Keilfläche des Trägers 40, und sodann auf die betreffende Fläche der nachfolgenden Stützplatte 9. Die Stützplatten 9 können aus Stahlblech hergestellt sein. Es ist auch denkbar die Stützplatten aus einem anderen Material herzustellen.

Die Vorrichtung gemäß der Figuren 1 bis 3 ist für den Antrieb von Schienenfahrzeugen vorgesehen. Die Kupplungsvorrichtung dient zum Ausgleich von Drehschwingungen zwischen Treibachse und Drehgestell. Die Kupplungsvorrichtung wird in das Drehgestell eingebaut. Die erfindungsgemäßen Bauteile gleichen den Federweg der Primärfeder kardanisch aus. Dabei verschieben sich die Gummischichten in den Federeinheiten in axialer Richtung.

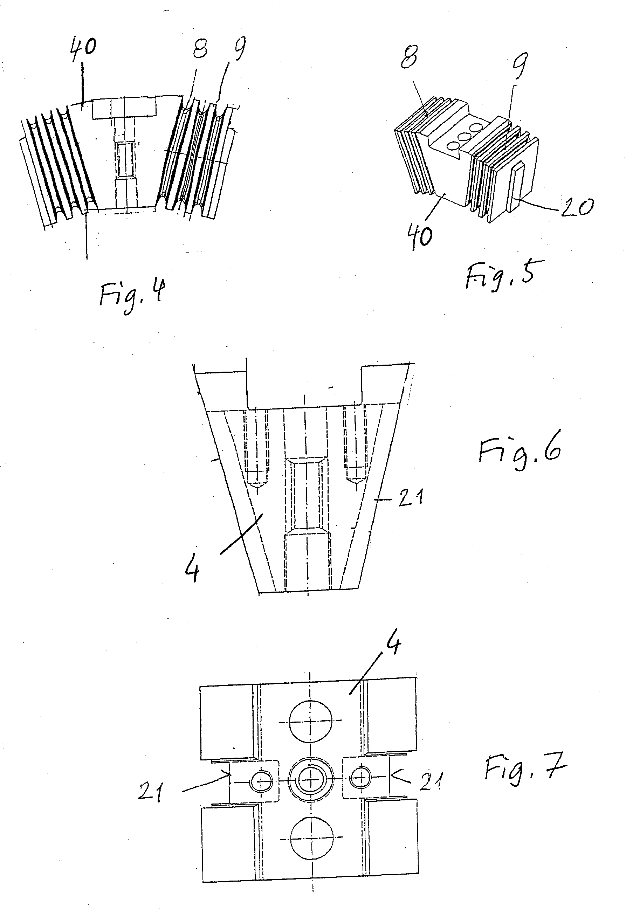

Das in Figur 4 rechts dargestellte Federplatten-Stützplatten-Paket ist ungespannt, während das links dargestellte Paket gespannt ist. Siehe auch Figur 5.

In Figur 5 erkennt man drei miteinander fluchtende Bohrungen, nämlich eine mittlere Bohrung für den genannten Zylinderstift 7, der als Passstift dient, sowie die beiden benachbarten Bohrungen für jeweils eine Befestigungsschraube 6.

In Figur 5 erkennt man weiterhin eine Führungsleiste 20. Diese ist bei den Federeinheiten der einen Kupplung jeweils an deren beiden Enden vorgesehen, somit an den beiden äußeren Stützplatten 9. Bei dem Träger 4 der anderen Kupplung sind stattdessen zwei Nuten 21 vorgesehen - siehe die Figuren 6 und 7. Die Führungsleisten 20 der einen Federeinheit der einen Kupplung greifen in die Nuten 21 der Träger der anderen Kupplung ein und dienen zur axialen Sicherung, das heißt zum Verhindern einer Axialverschiebung der Federeinheiten.

Die Federplatten 8 müssen im montierten Zustand vorgespannt sein, um aufgrund des Antriebsdrehmomentes nicht abzuheben. Die Vorspannung wird automatisch durch Montieren der keilförmigen Träger erzielt.

Beim Montieren kann man auf zweierlei Weise vorgehen:
Es können die aus Federplatten 8 und Stützplatten 9 gebildeten Federpakete in den Zwischenraum zwischen zwei einander benachbarten Fortsätzen 3.1, 3.1 eingesetzt werden. Sodann kann der keilförmige Träger 4, 40 zwischen die Federpakete eingesetzt und angezogen werden.

Alternativ kann aber auch die Federeinheit, bestehend aus Träger 40 und den Federplatten 8 sowie den Stützplatten 9 im voraus, zu einer einzigen Einheit vereinigt und dann eingesetzt werden, mit anschließendem Verschrauben des gleichnamigen Trägers 40 an Fortsatz 3.

Der Zylinderstift 7 ist durch den keilförmigen Träger 4, 40 hindurchgeführt und in den betreffenden Fortsatz 3.1 eingeführt. Er gewährleistet die Lage der Bauteile.

Es können zusätzlich Laschen vorgesehen werden, die an den Trägern 4, 40 mittels Schrauben befestigt werden, und die die Federpakete aus Federplatten 8 und Stützplatten 9 übergreifen. Damit wird sichergestellt, dass die Federpakete beim Betrieb nicht radial nach außen gleiten.

Die Herstellung der erfindungsgemäßen Kupplung ist sehr einfach. Die wesentlichen Teile der Federeinheit, vor allem die keilförmigen Träger 4, 40, können aus Aluminium gefertigt werden, um das Gewicht der Kupplung zu verringern.

Vorteilhaft ist die folgende Reihenfolge der Montage der erfindungsgemäßen elastischen Kupplung:
- Zunächst wird der Zylinderstift 7 in den Träger 40 eingesetzt.
- Die aus Träger 40, Federplatten 8 und Stützplatten 9 bestehende Einheit wird sodann am Grundkörper 3 montiert.

Auf diese Weise wird sichergestellt, dass jede der Führungsleisten 20 in ihrer richtigen Position liegt und sauber in die zugehörende Nut 21 eingreift. Sollte die Montage in umgekehrter Reihenfolge erfolgen, so müssten die Führungsleisten 20 während der Montage nachjustiert werden.

Es versteht sich, dass Stift 7 nicht unbedingt zylindrisch sein muss, sondern auch jeden anderen Querschnitt haben kann.

### Bezugszeichenliste

- 1.: Kupplung
- 1.1: Stirnverzahnung
- 2: Hohlwelle
- 3: Grundkörper
- 3.1: Fortsatz
- 4: keilförmiger Träger
- 5: Drehachse
- 6: Schrauben
- 7: Zylinderstift
- 8: Federplatten
- 9: Stützplatten
- 10: Kupplung
- 10.1: Stirnverzahnung
- 20: Führungsleiste
- 21: Nut
- 40: keilförmiger Träger

## Patentansprüche

1. Kupplungsvorrichtung zum Übertragen eines Drehmomentes von einer Antriebswelle auf eine Abtriebswelle, umfassend die folgenden Merkmale:
1.1 es sind zwei Kupplungen (1, 10) vorgesehen;
1.2 jeweils mit einem Primärteil und einem Sekundärteil;
1.3 Primärteil und Sekundärteil sind entgegen der Kraft von Federn gegeneinander begrenzt verdrehbar;
1.4 die Federn umfassen plattenförmige Federplatten (8) aus gummielastischem Material;
1.5 zwischen den Federplatten (8) sind Stützplatten (9) angeordnet;
1.6 mehrere Träger (4, 40) zum Tragen der Federplatten (8) und der Stützplatten (9) sind über den Umfang der jeweiligen Kupplung (1, 10) verteilt angeordnet;
1.7 jeder Träger (4, 40) weist in Draufsicht auf eine Kupplungsachse (5) gesehen die Kontur eines Keiles auf, der sich radial nach innen verjüngt;
1.8 beidseits eines jeden Trägers (4, 40) befindet sich an den beiden Keilflächen des Trägers (4, 40) angrenzend ein Paket aus Federplatten (8) und Stützplatten (9), die sich abwechseln;
1.9 die in Umfangsrichtung gesehen äußeren Stützplatten (9) der an den beiden Keilflächen des Trägers (40) einer Kupplung (10) angrenzenden Pakete aus Federplatten (8) und Stützplatten (9) weisen eine Führungsleiste (20) oder eine Führungsnut (21) auf, die mit einer entsprechenden Führungsleiste beziehungsweise Führungsnut eines benachbarten Trägers (4) (1) zusammenarbeiten;
1.10 jede Kupplung (1, 10) umfasst einen in Richtung der Kupplungsachse (5) gesehen sternförmigen Grundkörper (3);
1.11 der Grundkörper (3) weist eine Mehrzahl von sich radial nach außen erstreckenden Fortsätzen (3.1) auf;
1.12 jeder Fortsatz (3.1) trägt einen Träger (4, 40);
1.13 jeder Träger (4, 40) ist am zugehörenden Fortsatz (3.1) mittels zweier Schrauben (6) befestigt;
**gekennzeichnet durch** die folgenden Merkmale:
1.14 zwischen den beiden Schrauben (6) befindet sich ein zu den Schrauben (6) achsparalleler Positionierstift (7) zum Positionieren des Trägers (4, 40);
1.15 der Sekundärteil der ersten Kupplung (1) steht über eine Verbindungswelle mit dem Primärteil der zweiten Kupplung (10) in Triebverbindung;
1.16 die eine (1) der beiden Kupplungen steht mit der Antriebswelle, und die andere (10) der beiden Kupplungen steht mit der Abtriebswelle in Triebverbindung.

2. Kupplungsvorrichtung gemäß Anspruch 1, **dadurch gekennzeichnet, dass** die Federpakete, umfassend die Federplatten (8) und die Stützplatten (9), von den Trägern (4, 40) getrennte Bauteile sind.

3. Kupplungsvorrichtung gemäß Anspruch 1, **dadurch gekennzeichnet, dass** die Federplatten (8) der an den beiden Keilflächen des Trägers (40) einer Kupplung (10) angrenzenden Pakete aus Federplatten (8) und Stützplatten (9) jeweils auf die betreffende Keilfläche des Trägers (40) der einen Kupplung (10) und auf die betreffende Fläche der nachfolgenden Stützplatte (9) aufvulkanisiert sind.

4. Kupplungsvorrichtung nach einem der Ansprüche 1 bis 3, **dadurch gekennzeichnet, dass** die Verbindungswelle eine Hohlwelle ist.

5. Kupplungsvorrichtung gemäß einem der Ansprüche 1 bis 4, **dadurch gekennzeichnet, dass** der Positionierstift (7) durch den keilförmigen Träger (4, 40) hindurchgeführt und in den betreffenden Fortsatz (3.1) eingeführt ist.

6. Kupplungsvorrichtung gemäß einem der Ansprüche 1 bis 5, **dadurch gekennzeichnet, dass** zusätzlich Laschen vorgesehen sind, die an den Trägern (4, 40) mittels Schrauben befestigt sind, und die die Federpakete aus Federplatten (8) und Stützplatten (9) übergreifen.

7. Verfahren zum Montieren einer Kupplungsvorrichtung gemäß einem der Ansprüche 1 bis 6, **gekennzeichnet durch** die folgenden Verfahrensschritte:
7.1 der Positionierstift (7) wird in den Träger (40) eingesetzt;
7.2 die den Träger (40), die Federplatten (8) und die Stützplatten (9) umfassende Federeinheit wird am Grundkörper (3) montiert.

## Claims

1. A coupling device for transmitting torque from a drive shaft to an output shaft, comprising the following features:
1.1 two couplings (1, 10) are provided;
1.2 each with a primary and a secondary part;
1.3 the primary and secondary parts are twistable against each other to a limited extent against the force of springs;
1.4 the springs comprise plate-shaped spring plates (8) made of rubber-elastic material;
1.5 support plates (9) are arranged between the spring plates (8);
1.6 several carriers (4, 40) for carrying the spring plates (8) and the support plates (9) are distributed over the circumference of the respective coupling (1, 10);
1.7 each carrier (4, 40), as viewed from above on a coupling axis (5), has the contour of a wedge which tapers radially inwardly;
1.8 on both sides of each carrier (4, 40), adjacent to the two wedge faces of the carrier (4, 40), there is a packet of spring plates (8) and support plates (9) which alternate;
1.9 the support plates (9), which are the outer ones as seen in the circumferential direction, of the packets of spring plates (8) and support plates (9), which packets are adjacent to the two wedge faces of the carrier (40) of a coupling (10), have a guide strip (20) or a guide groove (21) which cooperates with a corresponding guide strip or guide groove of an adjacent carrier (4) (1);
1.10 each coupling (1, 10) comprises a star-shaped base body (3) as seen in the direction of the coupling axis (5);
1.11 the base body (3) comprises a plurality of radially outwardly extending projections (3.1);
1.12 each projection (3.1) carries a carrier (4, 40);
1.13 each carrier (4, 40) is attached to the associated projection (3.1) by means of two screws (6);
**characterized by** the following features:
1.14 between the two screws (6) there is a positioning pin (7) parallel to the axis of the screws (6) for positioning the carrier (4, 40);
1.15 the secondary part of the first coupling (1) is in drive connection with the primary part of the second coupling (10) via a connecting shaft;
1.16 the one (1) of the two couplings is in drive connection with the drive shaft and the other (10) of the two couplings is in drive connection with the output shaft.

2. Coupling device according to claim 1, **characterized in that** the spring packets, comprising the spring plates (8) and the support plates (9), are components separated from the carriers (4, 40).

3. Coupling device according to claim 1, **characterized in that** the spring plates (8) of the packets of spring plates (8) and support plates (9) which are adjacent to the two wedge faces of the carrier (40) of a coupling (10) are each vulcanized onto the respective wedge face of the carrier (40) of one coupling (10) and onto the respective face of the subsequent support plate (9).

4. Coupling device according to one of claims 1 to 3, **characterized in that** the connecting shaft is a hollow shaft.

5. Coupling device according to one of claims 1 to 4, **characterized in that** the positioning pin (7) is passed through the wedge-shaped carrier (4, 40) and inserted into the respective projection (3.1).

6. Coupling device according to one of claims 1 to 5, **characterized in that** additional lugs are provided which are fastened to the carriers (4, 40) by means of screws and which overlap the spring packets of spring plates (8) and support plates (9).

7. Method for mounting a coupling device according to one of claims 1 to 6, **characterized by** the following method steps:
7.1 the positioning pin (7) is inserted into the carrier (40);
7.2 the spring unit comprising the carrier (40), the spring plates (8) and the support plates (9) is mounted on the base body (3).

## Revendications

1. Dispositif d'accouplement pour la transmission d'un couple de rotation d'un arbre d'entraînement à un arbre de sortie, comportant les caractéristiques suivantes :
1.1 deux accouplements (1, 10) sont prévus,
1.2 comportant chacun une partie primaire et d'une partie secondaire ;
1.3 la partie primaire et la partie secondaire sont capables d'une rotation limitée l'une par rapport à l'autre contre la force de ressort ;
1.4 les ressorts comprennent des plaques de ressort (8) en forme de plaque en matériau élastique caoutchouteux ;
1.5 des plaques d'appui (9) sont disposées entre les plaques de ressort (8) ;
1.6 plusieurs supports (4, 40) destinés à porter les plaques de ressort (8) et les plaques d'appui (9) sont répartis sur la circonférence de chaque accouplement (1, 10) ;
1.7 chaque support (4, 40) présente, en vue de dessus sur un axe d'accouplement (5), un contour en coin qui se resserre vers l'intérieur dans le sens radial ;
1.8 il est prévu de part et d'autre de chaque support (4, 40), contigu aux deux surfaces de coin du support (4, 40), un paquet de plaques de ressort (8) et de plaques d'appui (9) alternées ;
1.9 les plaques d'appui (9) extérieures dans le sens de la circonférence des paquets de plaques de ressort (8) et de plaques d'appui (9) contigus aux deux surfaces de coin du support (40) d'un accouplement (10) présentent un bandeau de guidage (20) ou une rainure de guidage (21) qui coopère avec un bandeau de guidage ou une rainure de guidage correspondants d'un support (4) (1) voisin ;
1.10 chaque accouplement (1, 10) comprend un corps de base (3) en forme d'étoile, vu dans le sens de l'axe d'accouplement (5) ;
1.11 le corps de base (3) présente plusieurs saillies (3.1) qui s'étendent vers l'extérieur dans le sens radial ;
1.12 chaque saillie (3.1) porte un support (4, 40) ;
1.13 chaque support (4, 40) est fixé sur la saillie (3.1) correspondante au moyen de deux vis (6) ;
**caractérisé en ce qu'**il comporte les caractéristiques suivantes :
1.14 il est prévu entre les deux vis (6) une goupille de positionnement (7) parallèle à l'axe des vis (6) pour le positionnement du support (4, 40) ;
1.15 la partie secondaire du premier accouplement (1) est en liaison motrice avec la partie primaire du deuxième accouplement (10) par l'intermédiaire d'un arbre de liaison ;
1.16 l'un (1) des deux accouplements est en liaison motrice avec l'arbre d'entraînement et l'autre (10) des deux accouplements avec l'arbre de sortie.

2. Dispositif d'accouplement selon la revendication 1, **caractérisé en ce que** les paquets de ressort comprenant les plaques de ressort (8) et les plaques d'appui (9) sont des pièces séparées des supports (4, 40).

3. Dispositif d'accouplement selon la revendication 1, **caractérisé en ce que** les plaques de ressort (8) des paquets de plaques de ressort (8) et de plaques d'appui (9) contigus aux deux surfaces de coin du support (40) d'un accouplement (10) sont fixées chacune par vulcanisation sur la surface de coin correspondante du support (40) d'un accouplement (10) et sur la surface correspondante de la plaque d'appui (9) suivante.

4. Dispositif d'accouplement selon l'une des revendications 1 à 3, **caractérisé en ce que** l'arbre de liaison est un arbre creux.

5. Dispositif d'accouplement selon l'une des revendications 1 à 4, **caractérisé en ce que** la goupille de positionnement (7) est insérée à travers le support (4, 40) en forme de coin et dans la saillie (3.1) correspondante.

6. Dispositif d'accouplement selon l'une des revendications 1 à 5, **caractérisé en ce que** sont en outre prévues des pattes qui sont fixées aux supports (4, 40) au moyen de vis et qui couvrent les paquets de ressorts formés de plaques de ressort (8) et de plaques d'appui (9).

7. Procédé pour l'assemblage d'un dispositif d'accouplement selon l'une des revendications 1 à 6, **caractérisé en ce qu'**il comprend les étapes de procédé suivantes :
7.1 insertion de la goupille de positionnement (7) dans le support (40) ;
7.2 assemblage de l'unité de ressort comprenant le support (40), les plaques de ressort (8) et les plaques d'appui (9) sur le corps de base (3).
